# EUROPEAN PATENT SPECIFICATION

(11) **EP 2 848 087 B1**
(45) Date of publication and mention of the grant of the patent: **15.11.2017**
(21) Application number: 13720523.3
(22) Date of filing: 02.05.2013
(51) Int. Cl.: H05B 3/14, H05B 3/26, G01N 21/35, G01N 21/3504, G01N 21/61, G01N 27/16

(54) **IR EMITTER AND NDIR SENSOR**
IR SENDER UND NICHTDISPERSIVE INFRAROT-GASSENSOR
EMETTEUR IR ET DÉTECTEUR DE GAZ NON DISPERSIF INFRAROUGE

(30) Priority: 08.05.2012 US 201213466626
(43) Date of publication of application: 18.03.2015
(73) Proprietor: AMS Sensors UK Limited, Cambridge CB4 0DL (GB)
(72) Inventor: ALI, Syed Zeeshan, Cambridge Cambridgeshire CB4 1SY (GB); UDREA, Florin, Cambridge Cambridgeshire CB2 0RB (GB); GARDNER, Julian, Kineton Warwickshire CV35 0LA (GB); CHOWDHURY, Mohamed Foysol, Milton Cambridgeshire CB24 6EB (GB); POENARU, llie, Cambridge Cambridgeshire CB23 8TN (GB)
(74) Representative: Iqbal, Md Mash-Hud
(86) International application number: PCT/GB2013/051146
(87) International publication number: WO 2013/167874

(56) References cited:
- WO-A1-02/080620
- US-A- 5 747 808
- US-A- 5 910 659
- US-A1- 2011 174 799

## Description

### Field of the Invention

This invention relates to a thermal Infra-Red (IR) source using a micro-hotplate fabricated on a microchip. The invention also relates to integrating the IR source with an IR detector to make an NDIR sensor.

### Background to the Invention

It is known to fabricate a thermal IR source on a silicon substrate consisting of a micro-heater formed within a thin membrane layer (made of electrically insulating layers) that is formed by etching part of the substrate. Such devices can be used to provide heat (e.g. 600° C) with low power consumption (typically from a few mW to hundreds of mW) for use as infra-red sources/emitters.

For Example, Parameswaran et. al. "Micro-machined thermal emitter from a commercial CMOS process," IEEE EDL 1991 reports a polysilicon heater for IR applications made in CMOS technology, with a front side etch to suspend the heater and hence reduce power consumption.

Similarly, D. Bauer et. Al. "Design and fabrication of a thermal infrared emitter" Sens & Act A 1996, also describes an IR source using a suspended polysilicon heater although the device is not envisaged to be fabricated in a CMOS process. Moreover, wafer bonding is used to encapsulate the heater in vacuum (which adds extra fabrication steps and increases the manufacturing cost).

Patent US5285131 by Muller et al. and patent US2008/0272389by Rogne et. al both describe similar devices using a polysilicon heater.

San et. al. "A silicon micromachined infrared emitter based on SOI wafer" (Proc of SPIE 2007) describe an IR emitter fabricated from an SOI substrate using polysilicon as the heater and DRIE to form the membrane.

The use of polysilicon in all these designs reduces the stability of the device as polysilicon resistance drifts in time at high temperatures above 400°C.

Yuasa et. al "Single Crystal Silicon Micromachined Pulsed Infrared Light Source" Transducers 1997, describe an infrared emitter using a suspended boron doped single crystal silicon heater. The paper does not envisage the device to be fabricated within a CMOS process.

Watanabe, in patent EP2056337 describes a suspended silicon filament as an IR source. The device is vacuum sealed by bonding a second substrate. This device is not envisaged to be fabricated in a CMOS process, and the construction of the device also does not lend itself to be fabricated in a CMOS process.

Cole et. al. "Monolithic Two-Dimensional Arrays of Micromachined Microstructures for Infrared Applications" (proc of IEEE 1998) describe an IR source on top of CMOS processed device. These IR sources consist of a suspended micro-heater fabricated after considerable post-CMOS processing. These extra processing steps add to the fabrication cost of the device.

Hildenbrand et. al. "Micromachined Mid-Infrared Emitter for Fast Transient Temperature Operation for Optical Gas Sensing Systems", IEEE Sensor 2008 Conference, reports on a platinum heater on suspended membrane for IR applications. Platinum is however not CMOS compatible and its use in CMOS foundries is prohibited, as it acts as a deep dopant and can contaminate other CMOS process steps.

Similarly Ji et. Al. "A MEMS IR Thermal Source For NDIR Gas Sensors" (IEEE 2006) and Barritault et. al "Mid-IR source based on a free-standing microhotplate for autonomous CO2 sensing in indoor applications" (Sensors & Actuators A 2011) describe a micromachined IR source based on a platinum heater. Weber et. al. "Improved design for fast modulating IR sources" describe suspended as well as closed membrane designs for IR sources, both using a platinum heater and a membrane consisting of Silicon oxide and silicon nitride layers.

Spannhake et. Al. "High-temperature MEMS Heater Platforms: Long-term Performance of Metal and Semiconductor Heater Materials" (Sensors 2006) describes micro-hotplate based on either platinum or antimony doped Tin oxide heaters.

As already mentioned, Platinum is incompatible with CMOS processes and so these devices cannot be fabricated in a CMOS process. This increases the fabrication cost and means that circuitry cannot be fabricated with the device.

Tu et. al, "Micromachined, silicon filament light source for spectrophotometric microsystems" Applied Optics, 2002, presents design of a light source employing single crystal silicon heaters on an SOI membrane. Suspended filaments however, have less mechanical stability than a full membrane.

US patent 6297511 by Syllaios et. al. describes an IR emitter made on a suspended membrane with a resistive heater which can be of various materials such as titanium, tungsten, nickel, single crystal silicon or polysilicon. US patents 5500569, 5644676, 5827438 by Bloomberg et. al. report on IR sources with either polysilicon or metal (such as tungsten, tantalum, titanium-tungsten alloy, molybdenum) heaters. However, these devices are not envisaged to be fabricated using a CMOS process.

WO 02/080620 A1 by Pollien et. al. suggests using metal silicides as the heater material in micro-hotplates. The silicide is mentioned as having a polycrystalline structure from silicides of tantalum, zirconium, tungsten, molybdenum, niobium and hafnium. The possible use of such devices as IR sources is mentioned. However metal silicides are not standard materials used in commercial CMOS processes. Advantages of manufacturing the micro-hotplates by a standard CMOS process are given, however no mention is made of how this can be achieved given that metal silicides is not a material found in CMOS processes. In addition no mention of a CMOS process is made in the claims of the patent.

It is also known to fabricate IR detectors in silicon technology. Kim et. al. "A new uncooled thermal infrared detector using silicon diode" Sens & Act A 89 (2001) 22-27 describes a diode for use as an IR detector. US patent 6597051 describes a thermopile fabricated by micromachining for use as an IR detector. Eminoglu et. al. "Low-cost uncooled infrared detectors in CMOS process" describes an IR detector using diodes on a microbridge membrane fabricated in a CMOS process Sens & Act A 109 (2003) 102-113. A.Graf et. al. "Review of micromachined thermopilers for infrared detection," Meas. Sci. Technol. 18(2007) R59-R75) describes various thermopile based micro-machined IR detectors reported in literature. It is also known to make NDIR sensors, for example Fordl and Tille "A High-Precision NDIR CO2 gas sensor for automotive applications" IEEE Sensors Journal vol 6 No.6 2006, and patent US2007/0102639 by Cutler et. al describe typical NDIR sensors consisting of a filament bulb as an IR source, and a thermopile based IR detector. The two are placed at the opposite ends of a small chamber where gas can enter through a semi permeable membrane (which blocks dust and IR radiation from outside). Depending on the concentration of the target gas, the amount of IR emission of a particular wavelength is absorbed within the optical path, and using the measurement from the IR detector can be used to determine the gas concentration. Most NDIR sensors also have an optical filter to allow only a small range of wavelengths to reach the IR detector so as to make it specific for the gas that absorbs that wavelength.

Other patents, such as US2008/0239322 by Hodgkinson et. al., US7244939 by Stuttard et. al, US2008/0308733 by Doncaster et. al., and US7541587 by Cutler et al. describe similar devices.

In almost every case, the IR emitter and detector are two different components but packaged together. An exception is US patent 5834777 by Wong, where both the emitter and detector are on the same chip with an optical path made on the chip. However in this case, because the optical path is on the chip, it is a very small distance for the IR emission to travel, and so the sensor has a low sensitivity. US 2011/174799 relates to a micro-hotplate. US 5 901 659 relates to a thermal IR generator. US 5 747 808 describes an NDIR sensor. WO02080620 relates to a high temperature micro-hotplate.

### Statement of the Invention

Aspects of the present invention are set out in the accompanying claims.

We disclose an IR source comprising a resistive heater made preferably from a CMOS usable metal on a dielectric membrane fabricated preferably in a CMOS process followed by a back etch. The CMOS metal may comprise at least one layer of tungsten.

We also disclose an Infra-Red (IR) source comprising a resistive heater on a CMOS-based dielectric membrane formed on a chip, wherein at least one layer of tungsten forms both the resistive heater and an interconnect metal in CMOS circuitry on the chip. It will be appreciated that the term "CMOS-based dielectric membrane" refers to a dielectric membrane fabricated using state of the art CMOS processing steps.

There is provided a micro-hotplate fabricated using a CMOS process. The process starts with a simple silicon wafer, or an SOI wafer which is processed using a standard commercial CMOS or SOI process that uses tungsten as an interconnect material for electronic devices. The tungsten interconnect metal is used to form the micro-heater for the device. A Ti/TiN liner is used to improve the stability of the metal. The CMOS processing step is followed by a back etching step to form the membrane. This step can be either dry etching by DRIE or wet anisotropic etching such as KOH or TMAH.

The membrane or the heater can be either circular or rectangular shaped, the circular shape having an additional advantage of reducing the mechanical stress. The heater can be of any shape such as meander, spiral, ring, multiple rings etc. The device may also consist of one or more metal heat spreading plates above the heater. The device may also have a metal heat spreading plate formed from the top metal layer which is then exposed by removing the passivation. A silicon heat spreading plate may also be fabricated just below the heater to improve the temperature uniformity. This can be formed either using the active silicon layer in an SOI process, or for a bulk process by doping the silicon region during before bulk etching to leave a silicon island unetched during the back etch. Alternately, a diode (i.e. thermodiode), or a thermotransistor (npn or pnp with one junction shorted), or a resistive track of silicon maybe be formed below the heater (or adjacent to the heater) instead of the heat spreading plate, and can act as a temperature sensor. The device may also have a resistive temperature sensor formed from one of the metal layers. The heater itself can also be used as a temperature sensor - in which case two extra tracks can optionally be connected to the heater to improve the resistance measurement using a 4-wire measurement.

The IR source consists of an array of several membranes etched by DRIE packed together, each with its own micro-heater made from tungsten. This improves redundancy in case one of the devices fails. Another use of the array is to compensate for drift. For example, in an array of two, only one maybe used regularly, and the other one turned on only occasionally to calibrate the drift of the main heater. Alternately, two or more micro-hotplates can be driven in a cycle so that only one is on at any given time, and so increase the overall lifetime of the device.

Another use of the array is to have an array of smaller membranes instead of one large membrane. A large membrane is mechanically less stable compared to a small membrane, but a small membrane device will have lower IR emissions. By using an array of small membranes, the mechanical stability of a small membrane can be achieved while having high levels of IR emission. The use of DRIE to etch the membranes means that the membranes can be packed very close together and very little extra space on the chip is required when compared to a single large membrane. The micro-heaters can be electrically connected either so that they are driven together at the same time, or driven individually.

The micro-hotplates in the array can also be driven independently at different temperatures. This results in a broader spectrum of IR emission, and when used in an NDIR gas sensor system, can help improve the selectivity if a number of detectors are used. Alternately, the optics in the NDIR system can be designed so that the emission through each emitter in the array passes through a different IR filter and onto different detectors. This allows the capability of sensing more than one gas using a single NDIR sensor.

The micro-hotplate may be covered with a coating to improve the IR emission. This coating can be of any type, such as carefully controlled layers of silicon oxide, silicon nitride or polymers (e.g. polyimide). Alternately materials such as carbon black, carbon nanotubes, metal oxides or graphene can be grown or deposited on the micro-hotplate. These materials have high emissivity and therefore improve the amount of IR emitted. Other materials having high emissivity can also be used. Such materials can be deposited post-CMOS onto the heating area of the micro-hotplate via techniques similar to inkjet or nano depositions or can be grown via CVD across the entire wafer or only locally using the micro-hotplate as the source of heat during growth. Several micro-hotplates can be connected together across the silicon wafer to facilitate local growth.

An IR filter may be combined with the IR source. This is by using back etching to form a thin membrane consisting of silicon dioxide and/or silicon nitride on a silicon or SOI chip or wafer. This membrane can act as an IR filter. This chip/wafer is then combined with the IR source by the use of wafer bonding. The composition of the membrane acting as the filter can be changed and other materials can be deposited on the membrane to change the filtering properties as desired.

Alternatively the filter can be made by etching selectively the CMOS metal layers above the silicon in a mesh shape or as dots. The mesh size or the size of the dots and the distance between the dots are adjusted to filter the desired emission at particular wavelengths and/or to increase the emission at particular wavelengths. The etching of the metal layers above the silicon may be done in the CMOS sequence, and therefore does not come with additional cost.

This method can be combined with arrays by using an array of filters wafer bonded onto an array of IR source. Each filter can have either the same properties, or different properties to allow a different spectrum of wavelengths.

Another aspect is the packaging of the micro-hotplates. Any standard packaging such as TO-5, TO-39 or TO-46 can be used or they can be placed directly onto a PCB board, however the lids should be open to have a cavity to allow the emission of IR. In addition, the packaging can be done with IR reflecting surfaces below the chip as well as on the sides of the chip to improve the direction of the emission. The packaging may also include a filter in addition to, or in place of the filter waferbonded to the IR source or that made of the CMOS metal layer.

It can also be packaged directly in an NDIR chamber. Another possible packaging method is by flip chip, where a bump bond is applied to the bond pads, and the chip is packaged upside down on a PCB or on a package. An advantage of this method is that the IR is emitted through the trench, and the side walls of the trench act as a reflector. This makes the beam more directional. A reflecting material maybe deposited onto the trench sidewalls to improve their reflectivity. Alternatively the back-etch can be controlled using various wet and dry techniques to shape the walls of the trench to enhance the reflectivity. Additional metal layers within the membrane and the back plate of the packaging surface also act as reflectors.

Because the IR source is preferably made in a CMOS process, circuitry can be integrated on the same chip with the IR source. This can include the drive circuitry for the heater, circuitry for the temperature sensor, as well as a temperature controller circuit and other complex circuitry. The drive circuitry can be made to modulate the IR source and drive it at various frequencies. For example a very simple circuit could be made of only one MOSFET placed in series with the heater. By applying a controlled potential on the gate of the MOSFET, the heater can be switched on and off. The pulse width and the amplitude of the pulse on the gate control the temperature of the micro-hotplate.

An IR detector may be integrated on the same chip as the IR source. The IR detector consists of either a thermopile or an array of thermodiodes or thermotransistors on a membrane. If the detector is a thermopile it can consist of one or more thermocouples connected in series with one junction inside the membrane and one outside. The two thermocouple materials may consist of p or n doped single crystal silicon, n or p doped polysilicon or a metal (such as tungsten). If thermodiodes are used they may consist of a P+/N+ junction, or may have a p or n type well or drift region between. The diodes can be connected as an array to improve the sensitivity. Thermodiodes in particular have the advantage that their temperature coefficient is constant for high temperatures upto 500°C. Circuitry can be integrated on-chip to process the detector signal. Similarly thermotransistors are made in CMOS technology using bipolar npn or pnp structures with at least one junction shorted. The thermodiode or thermotransistors or circuits based on these are preferable, as the process control of active elements in CMOS such as diodes and transistors is better than that of passive elements such as resistors.

To improve the performance, the IR detector may also have an IR absorbing material such as carbon nanotubes, carbon black, graphene, polyimide, a polymer, metal films, metal blacks, thin film stacks or other materials with high IR absorption deposited on the top of the membrane. The IR absorbing layer should be carried out post-CMOS and can be formed by CVD, local growth or ink-jet deposition techniques.

Alternatively the IR absorption of the integrated IR detector can be increased by etching selectively the CMOS metal layers above the silicon in a mesh shape or as dots. The mesh size or the size of the dots and the distance of the dots are adjusted to increase the optical signal at a particular wavelength and/or to filter out signal at other wavelengths. The etching of the metal layers above the silicon is done in the CMOS sequence, and therefore does not come with additional cost.

The chip may be packaged to be used as an NDIR sensor within a package such that there is a partition between the two devices and the IR emission cannot travel directly from the source to the detector. Instead, the IR emission has to travel a much longer path to reach the source via an IR filter. This is achieved during both chip and package design. When designing the chip, the dielectric oxide between the emitter and detector is filled with vias and metal layers to block the transmission of IR within the dielectric oxide. After this a partition is formed above the chip which can be done during packaging, or earlier by wafer bonding with a patterned substrate on top. Complex circuitry can be integrated on the chip for drive and signal processing of both the IR source and detector on the chip.

The packaging to form such a sensor can be of different types. One embodiment of the invention is to package the chip in a cylindrical package with walls made from a reflective surface with a filled centre, so that the IR radiation travels in a circular path (reflecting from the package walls) from the emitter to the detector part of the chip. The optical path also has an optical filter to allow only the wavelength of interest to reach the IR detector. The package is covered with a particle filter to prevent air borne particles from coming in the optical path.

Another embodiment is for the package to be rectangular with the chip on one side, and a reflective surface on the far side of the package allowing reflected IR to travel from the source to the detector.

### Brief Description of the Drawings

In order that the invention may be more fully understood, a number of embodiments of the invention will now be described, by way of example, with reference to the accompanying drawings, in which:
Figures 1 to 8 are schematic cross-sections of different designs of a CMOS IR emitter.
Figures 9-12 are plan views of an IR source.
Figure 13,14 are plan views of an IR source consisting of a 2x2 array of membranes.
Figure 15 shows a schematic cross-section of an array device.
Figures 16,17 are plan views of an IR source with a patterned top metal to improve emission for a particular wavelength.
Figures 18 - 20 are cross-sections of an IR source with a patterned top metal to improve emission for a particular wavelength.
Figure 21 shows a schematic cross-section of an IR source with a wafer bonded IR filter.
Figure 22 shows a schematic cross-section of a chip with an IR source packaged in a flip-chip method.
Figure 23 shows a schematic cross-section of a chip with an IR source and an IR detector integrated on the same chip with partitions in between to prevent direct IR radiation between the two devices.
Figure 24 shoes a schematic cross-section of a chip with and IR source and a thermopile IR detector integrated on the same chip.
Figure 25 shows a schematic cross-section of a chip with an IR source and an IR detector integrated on the same chip with partitions in between to prevent direct IR radiation between the two devices, as well as a thin back-side film that is opaque to IR radiation.
Figure 26 shows a top view of a chip with an IR source and a thermopile IR detector integrated on the same chip.
Figure 27 shows a 3D schematic of a chip with both an IR emitter and a detector, and also shows a patterned substrate for wafer-bonding onto the chip.
Figure 28 shows a 3D schematic of a chip with both IR emitter and detector wafer with a substrate wafer bonded onto it to prevent IR emission travelling directly from the emitter to the detector.
Figures 29, 30 show the chip packaged as an NDIR sensor.

### Detailed Description of the Preferred Embodiments

Embodiments of the present invention seek to improve on the state of the art devices by using a CMOS layer of tungsten both as part of a heater which emits infrared radiation and an interconnect metal for electronic devices. The IR emitter is embedded into a dielectric membrane defined by etching the silicon substrate. The etching may be done by a Deep Reactive Ion (DRIE) technique. Such a device can operate reliably at high temperatures (well above 600°C) due to the use of the tungsten heater. Moreover the use of the tungsten layer within a CMOS process ensures very high stability, long term reliability and high reproducibility. This is in contrast to heaters fabricated by other techniques than CMOS such as screen printing. To further improve the reliability, the tungsten heater may have a titanium/titanium nitride liner. Furthermore, the use of the CMOS technology to fabricate the device results in lower fabrication costs and allows circuitry to be integrated on the same chip as the device.

In another embodiment of the invention, the device can be made as an array of micro-hotplates, consisting of either same size or smaller membranes packed together closely, each with its own heater. Using several small membranes instead of a large one results in better mechanical stability for each membrane without compromising the IR emission. Arrays also add redundancy to the design in case one device fails. Packing such membranes close together is achieved by the use of DRIE which allows vertical sidewalls between the membranes.

Another embodiment of the invention is to integrate an IR detector on the same chip as the IR source, to use the chip in an NDIR (Non dispersive InfraRed) gas sensor.

Fabricating the IR emitter and detector on the same chip can ensure that the IR emitter and detector have similar thermal mass and therefore similar speed. Moreover, the noise of the system is reduced. Furthermore, as a result of integration, and the use of the CMOS process, the NDIR chip can be made significantly cheaper.

The IR source and detector may be on the same chip with a partition in between, and packaged in such a way so as to that there is a relatively long optical path for the IR emission to travel from the emitter to the detector. An IR filter may be packaged between the path so that only the wavelength of interest reaches the detector. This wavelength is absorbed by the target gas, and hence the signal at the detector can be used to determine the gas concentration.

The CMOS process in all embodiments may be applied to Silicon-on-Insulator (SOI) substrates. SOI technology is widely used in high voltage, high temperature and high frequency electronics. The SOI may be used for three purposes:
1) To provide a region of silicon under the heater to integrate a thermodiode or a thermotransistor as a temperature sensor. This can be directly under the heater or adjacent to the heater. The thermodiode or the thermotransistor can be small in area to maintain low leakage, and generally expected to be used for operating at high temperatures (e.g. 600 C). Using the thermodiode or the thermotransistor the IR emitter temperature can be monitored with high accuracy.
2) To allow the ambient temperature to reach 225C. This is a result of both the SOI technology which results in low leakage currents and no latch-up and the use of tungsten metallization
3) To use the buried oxide present in the SOI substrates as an effective etch stop during the back-etching.

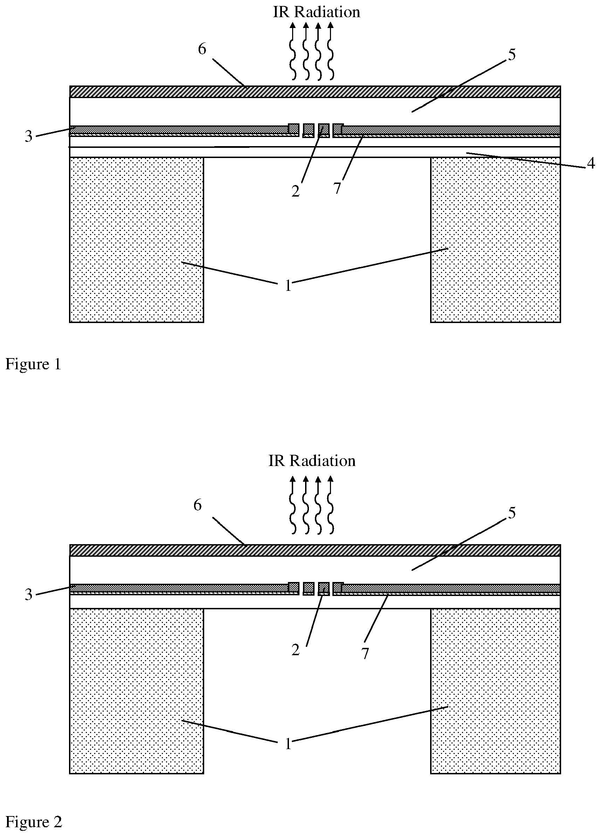

Figure 1 shows a schematic cross section of an IR source made in a SOI-CMOS process. There is provided a membrane layer 4,5,6 which is supported on a silicon substrate 1, the membrane layer consists of the buried oxide layer 4, dielectric layers 5 and a passivation layer 6. A tungsten resistive heater 2 is formed within the membrane layer and connected to the rest of a chip by tracks 3. The resistive heater 2 may be of any shape, for example, meander, spiral or ring-shaped, or may consist of multiple rings. The tungsten layer has a thin titanium/titanium liner 7 to improve the reliability of the heater.

The entire micro-hotplate is manufactured by using a commercial SOI process. Optionally, the membrane layer is formed in this case by the use of back etching using deep reactive ion etching (DRIE) technique. The micro-hotplate can be fabricated with or without circuitry on the same chip.

Figure 2 shows another cross-section of a micro-hotplate used as an IR emitter, fabricated in bulk CMOS process. The device is similar to that in Figure 1, except that the buried oxide layer 4 is absent.

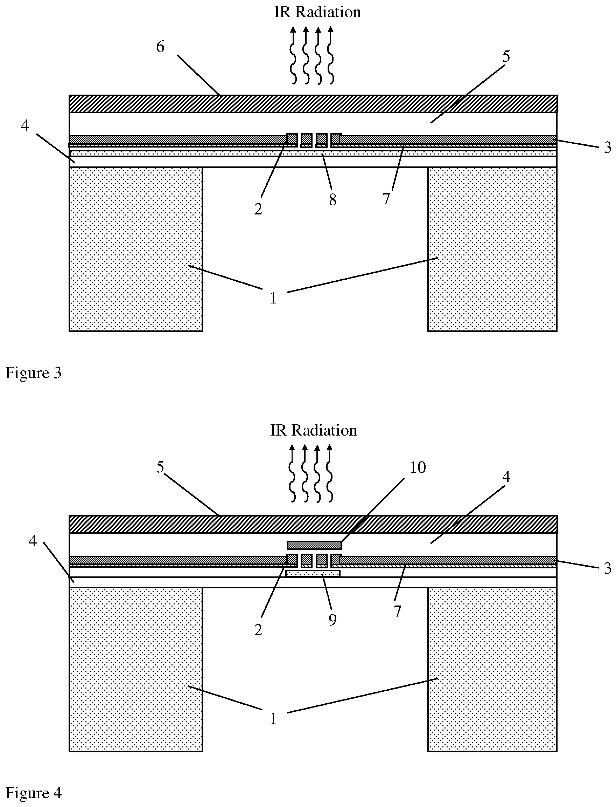

Figure 3 shows the cross-section of an IR emitter where the membrane layers also include a thin silicon layer 8 to improve the robustness of the membrane.

Figure 4 shows the cross-section of an IR emitter having a thin silicon plate 9 directly below the heater and a thin metal plate 10 directly above the heater so as to spread heat. The purpose of these is to improve the temperature uniformity. While this figure shows one particular arrangement of these plates, it can be easily seen that different arrangements can be done. For example there can be two metal plates above the heater, or metal plates above or below the heater, or the silicon plate can be on the underside of the membrane (in bulk CMOS process for example) instead of being embedded within the membrane.

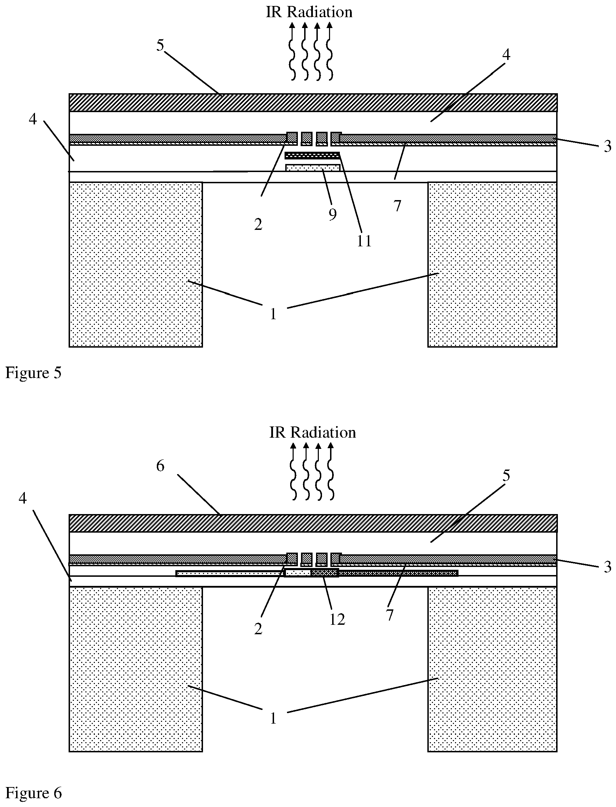

Figure 5 shows a cross-section of an IR emitter with a single crystal silicon plate as well as a polysilicon plate 11 below the heater. Both plates are as wide as the heater, and the purpose is to reflect the IR radiation from the heater to the front side, which would otherwise be wasted on the back side of the chip. In this way the efficiency of the IR emitter is improved.

Figure 6 shows a cross-section of an IR emitter with a diode temperature sensor 12 embedded within the membrane. The diode is as wide as the heater, and acts not only as a diode, but also tends to reflect the IR emission from the heater to the front of the chip. Note that the diode can also be made smaller than the heater, but in this case, it will primarily act as a temperature sensor and will not be as efficient in reflecting the IR radiation.

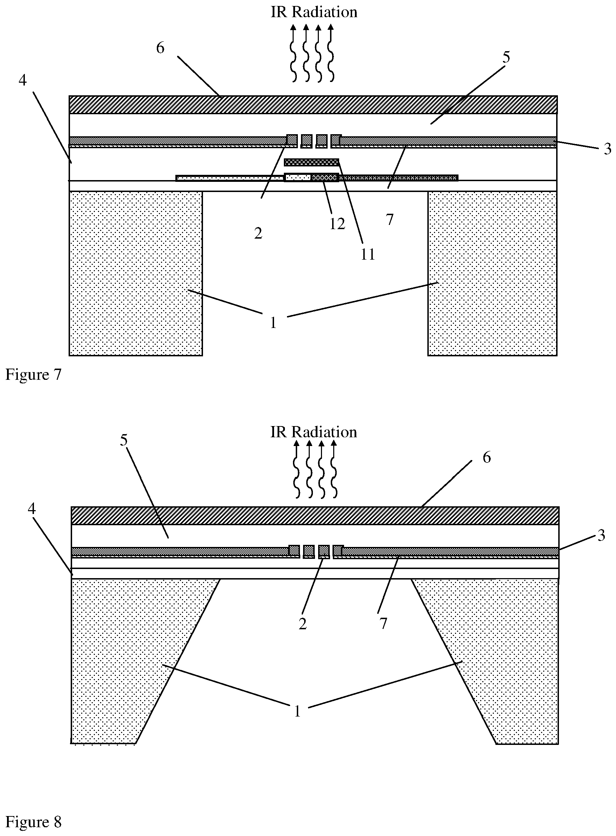

Figure 7 shows a cross-section of an IR emitter with a diode temperature sensor and a polysilicon plate 11 below the heater, both having the same width as the heater. Both of them act as a reflector for the IR radiation, while the diode also acts as a temperature sensor.

Figure 8 shows another cross-section of an IR emitter where the membrane has been formed by wet etching, optionally by an anisotropic KOH or TMAH back-etch.

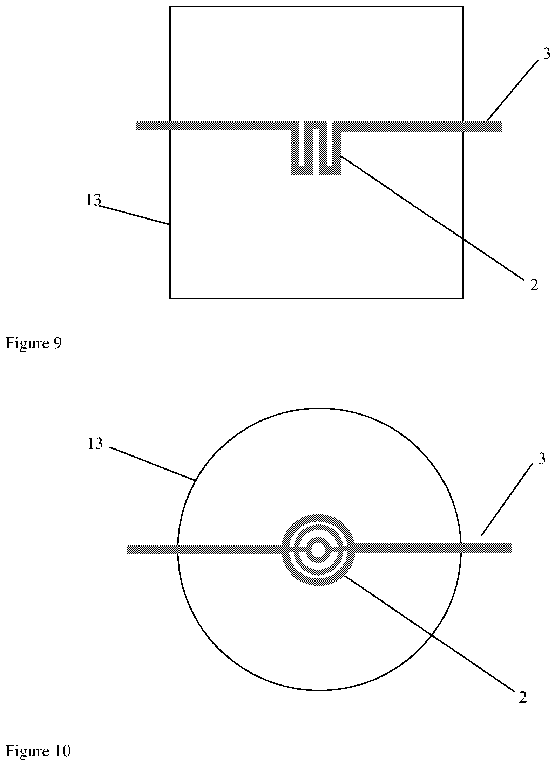

Figure 9 shows a plan view of a rectangular (in this case square) shaped micro-hotplate IR emitter with a meander heater 2 on a square membrane 13 with metal tracks 3. Figure 10 is a plan view of a circular micro-hotplate 2 on a circular membrane 13.

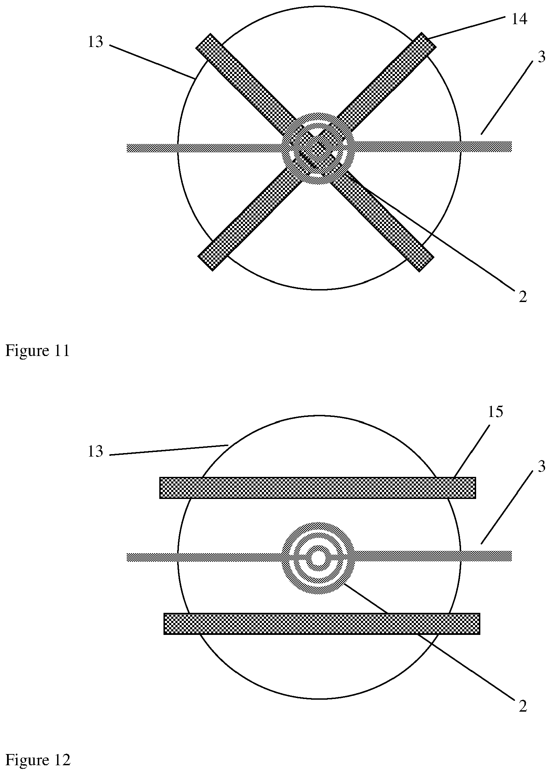

Figure 11 shows a circular IR emitter with reinforcing silicon beams 14 to improve the mechanical stability of the membrane formed from the thin silicon layer in the starting SOI substrate. Figure 12 shows another pattern of silicon beams 15 to improve the membrane stability. While these are given as examples, it can be easily seen that other arrangements and structures within the silicon layers can be used to improve the stability. In addition, the metal layers above the heater can also be made into such structures to improve membrane stability.

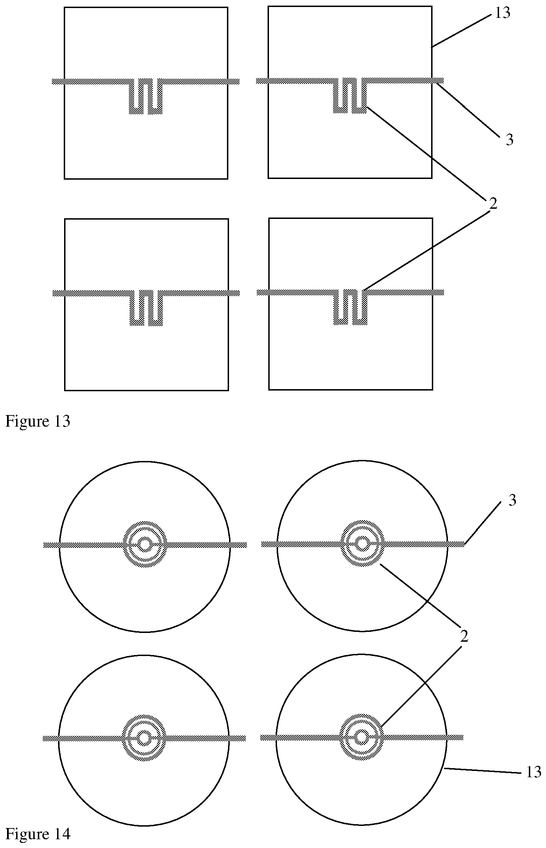

Figure 13 shows a plan view of an array of micro-hotplates to be used as an IR source. For the same output power, an array of smaller micro-hotplates will be more mechanically stable than a single larger micro-hotplate. The membranes for this array are formed by DRIE to allow the membranes to be packed close together. Figure 14 is the plan view of an array of circular micro-hotplates.

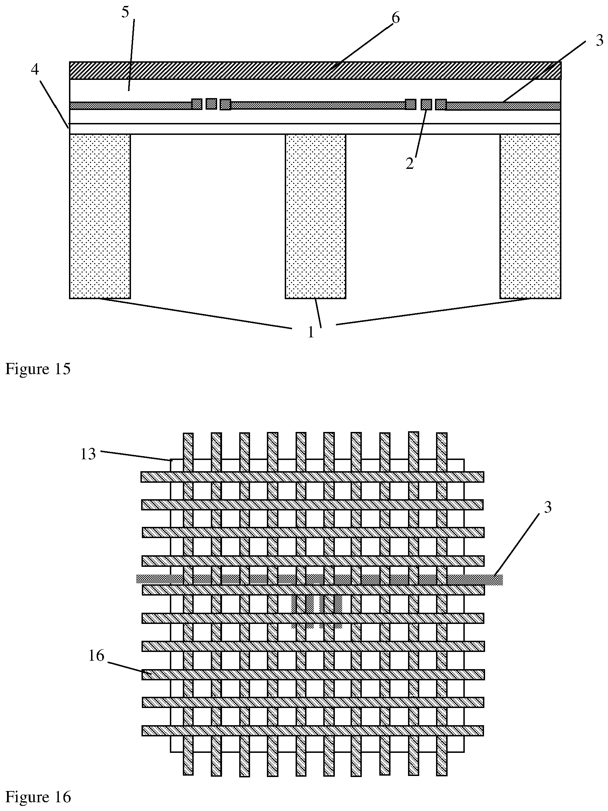

Figure 15 shows a schematic cross-section of two of the micro-hotplates of an array close to each other. The near vertical sidewalls obtained due to DRIE etching allow close packing of the membranes

Figure 16 shows a plan view of an IR source with a top metal 16 patterned as a grid. The pattern is made so as to act as a filter or to improve the emission for a particular wavelength.

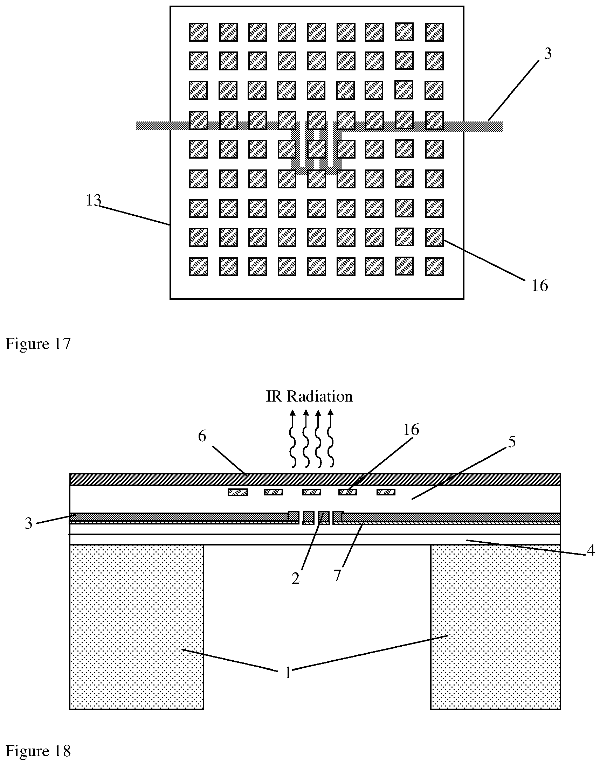

Figure 17 shows a plan view of an IR source with a top metal 16 patterned as an array of dots to improve the emission of a particular wavelength.

Figure 18 shows a cross-section view of an IR source with a top metal 16 patterned to act as a filter or to improve the emission for a particular wavelength.

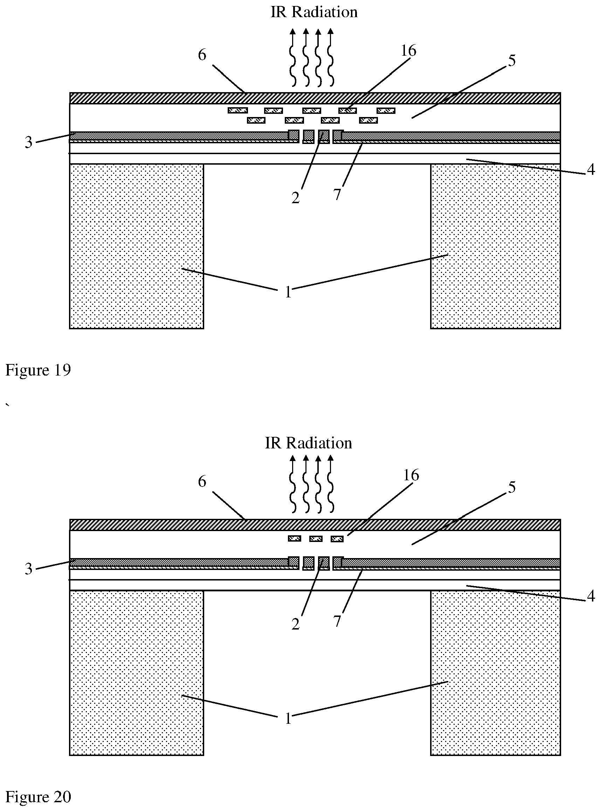

Figure 19 shows a cross-section of an IR source having two patterned top metals 16.

Figure 20 shows a cross-section of an IR source with a patterned top metal 16 for improving IR emission only within the heater area instead of the whole membrane.

The drawings shown in figures 16-20 for the patterned metal layer 16 to improve emission are given as examples, and it would be evident that other possible patterns and schemes can be used, such hexagonal or circular shapes for example.

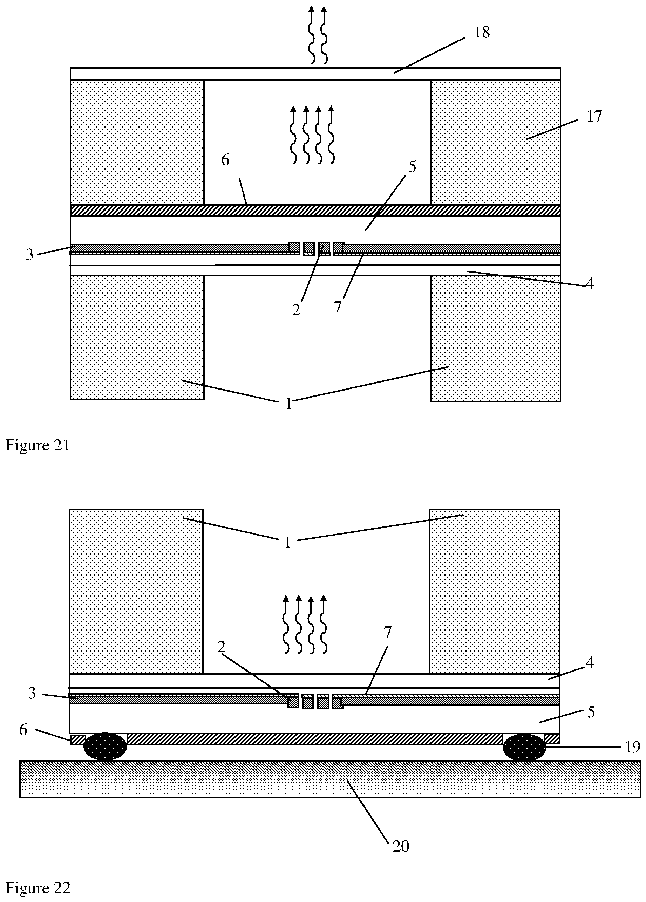

Figure 21 shows a schematic cross-section of an IR source with a wafer bonded IR filter. The chip/wafer bonded consists of a silicon substrate 17, and a membrane 18. The membrane may consist of silicon dioxide, silicon nitride and/or other materials to alter the filter properties as required.

Figure 22 shows a schematic cross-section of an IR source packaged in a flip-chip method. The flip chip is mounted upside down on the package base 20, and electrically connected through bump bonds 19.

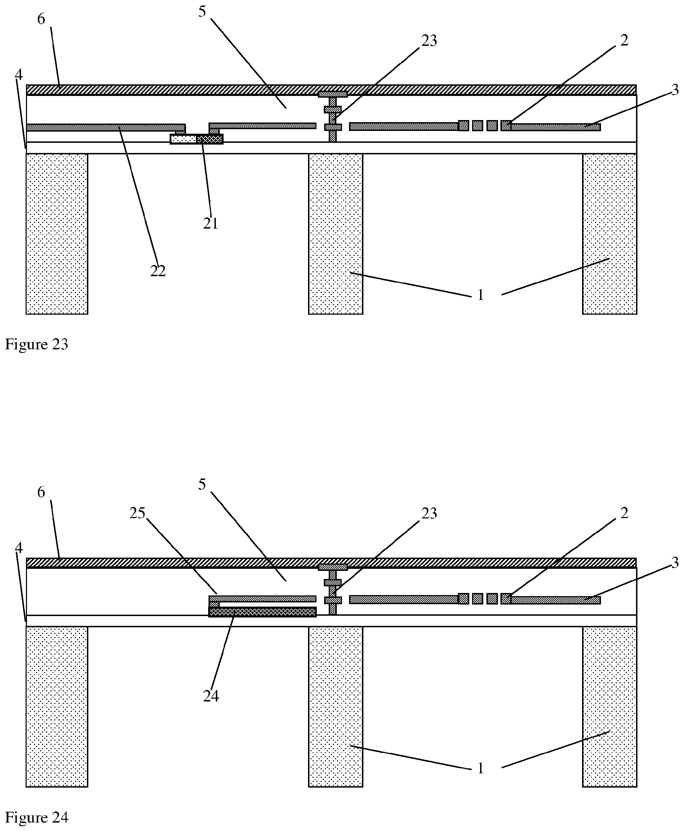

Figure 23 shows a schematic cross-section of a chip with an IR source and a diode based IR detector. The IR detector consists of a diode 21 and its connecting tracks 22. The diode is on a membrane similar to the membrane of the IR source. The chip is designed so that the emission from the IR source does not go directly to the IR detector. This is achieved by creating an isolation between the two through a stack of metal layers and vias 23 which are formed by the CMOS process parameters and prevent IR from travelling via the interdielectric layers.

Figure 24 shows a schematic cross-section of a chip with an IR source and a Thermopile IR detector. The thermopile shown in this case is a thermocouple consisting of a p-doped silicon track 24, and a tungsten track 25. However it should be noted that these two materials are given as an example and other materials available in the process such as polysilicon and n-doped silicon can also be used.

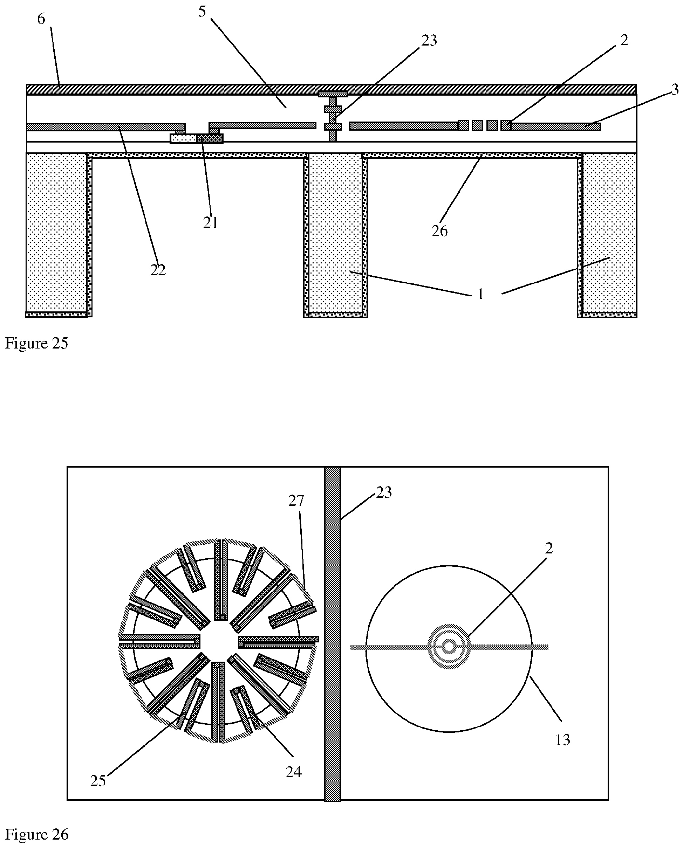

Figure 25 shows a diode IR Detector and IR Emitter on the same chip with a thin film coating 26 on the back of the chip. The coating is made of a material opaque to IR to prevent IR radiation travelling from the source to detector from the back side.

Figure 26 shows the top view of a chip with an IR source and a thermopile IR detector. In this case the thermopile consists of several thermocouples made of p-doped silicon and tungsten connected in series, the connection 27 can be made from any layer in the process, typically one of the metal layers, although single crystal silicon or polysilicon are also a possibility. The arrangement of thermocouples is shown as an example, and many different arrangements or number of thermocouples can be used.

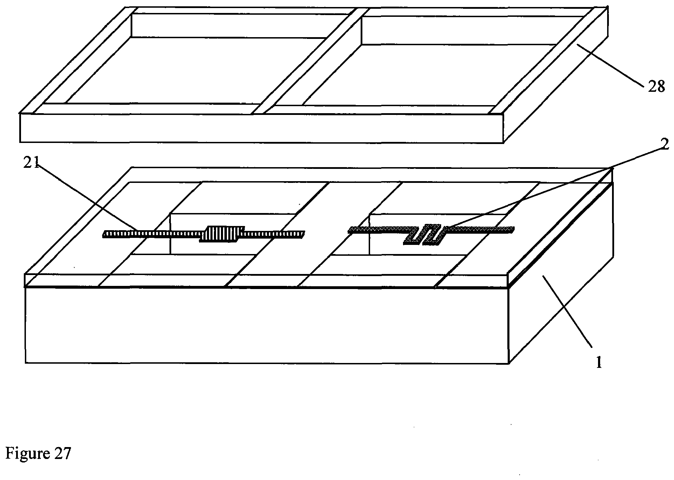

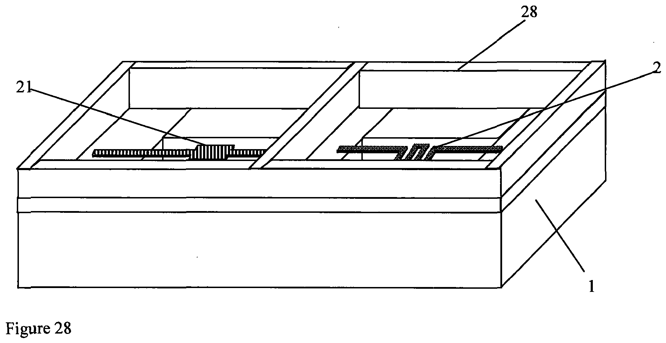

Figures 27 and 28 show a wafer bonding technique to ensure that no IR radiation travels in a short path between the source and detector. For this purpose a substrate 28 is patterned and wafer bonded on the chip so as to create a partition between the source and detector. Figure 27 shows a chip with an IR emitter and detector side by side, and a substrate patterned for wafer bonding onto the chip. Figure 28 shows a chip with both an IR emitter and detector which are separated by the use of wafer bonding.

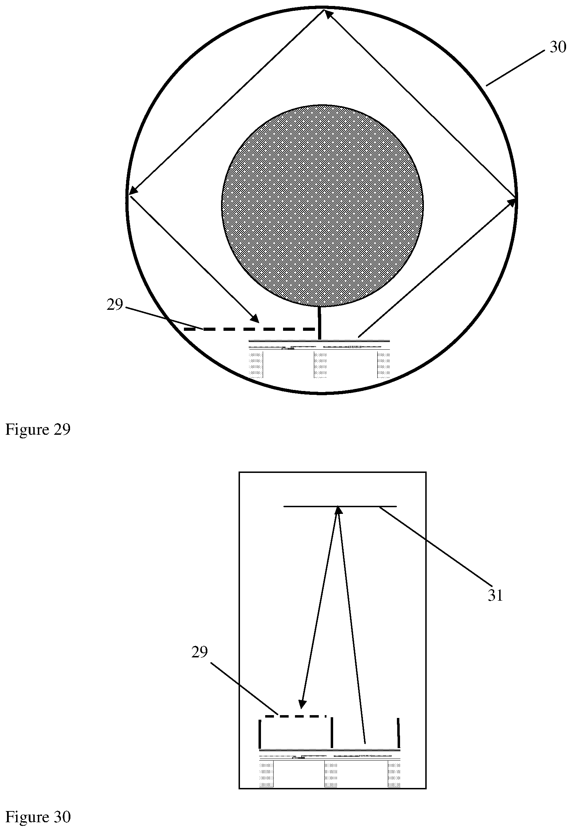

Figure 29 shows the schematic plan view of the chip with integrated emitter and detector in a circular package 29 for use as an NDIR sensor. It consists of a circular optical path from the IR source on the chip to the IR detector. The sidewalls of the path are made from a reflective material to allow the IR radiation to reflect off it to the detector. An optical filter 30 is packaged near the detector to only allow the wavelengths of interest through.

Figure 30 shows the schematic plan view of the chip in a rectangular package with a reflective surface 31 at the far end to reflect the emission to the detector.

## Claims

1. An Infra-Red (IR) source comprising a resistive heater (2) made from a CMOS usable metal on a dielectric membrane (4) fabricated in a CMOS process followed by a back etch, **characterised in that** the IR source comprises a patterned metal layer (16) on top of the resistive heater to improve IR emission.

2. The IR source according to claim 1, wherein the CMOS usable metal forms an interconnect metal (3) in CMOS circuitry formed on the same chip as the dielectric membrane (4), and wherein the CMOS usable metal comprises at least one layer of tungsten, and wherein said at least one layer of tungsten forms both the resistive heater (2) and the interconnect metal (3) in CMOS circuitry on the chip.

3. The IR source according to claim 1, wherein the heater (2) comprises a metal layer having a titanium/titanium nitride liner (7) directly underneath the metal layer, and/or wherein there is a monocrystaline silicon heat spreading plate (9) and/or a polycrystalline silicon plate (9) directly below the heater (2), the plates being configured to reflect IR emission from the heater.

4. The IR source according to any preceding claim, further comprising:
one or more metal heat spreading plates (10) directly above or below the heater, wherein the metal heat spreading plate (10) is optionally exposed by etching away the passivation, and/or
a MOSFET in series with the heater to control the temperature of the heater; and/or
a temperature sensor (12) embedded within the membrane and placed below the heater (2) or adjacent to the heater, the temperature sensor (12) including any of a diode temperature sensor (thermodiode), bipolar transistor temperature sensor (thermotransistor), resistive silicon temperature sensor and resistive metal temperature sensor, and wherein optionally the metal heat spreading plate is exposed by etching away the passivation, and wherein optionally the temperature sensor is configured to reflect IR emission from the heater.

5. The IR source according to any preceding claim, wherein:
the membrane (4) is formed by a process chosen from DRIE, anisotropic wet etching, KOH and TMAH; and/or
the dielectric membrane (4) is fabricated on a starting substrate (1) comprising an SOI or silicon wafer; and/or
the tungsten layer used for the heater (2) is close to an axis of zero stress on the membrane.

6. The IR source according to any preceding claim, formed as an array of micro-hotplates, each micro-hotplate comprising the resistive heater (2) made from CMOS usable metal on a dielectric membrane (4) fabricated in a CMOS process followed by a back etch, wherein the IR source is optionally configured so that all the micro-hotplates in the array are operable at the same time or individually.

7. The IR source according to any preceding claim, wherein:
a top surface of the membrane is provided with any of a silicon dioxide passivation layer (6) and a silicon nitride passivation layer; and/or
a top surface on the membrane is provided with a coating (26) comprising a material selected from a group including polymer, carbon black, carbon nanotubes, graphene, and a material with high IR emissivity, wherein the coating is optionally compatible with post-CMOS processing and is formed by one or more of CVD, local growth and ink-jet deposition techniques.

8. The IR source according to any preceding claim, wherein the patterned metal layer is a mesh (16) made of a CMOS usable metal layer placed on top of the resistive heater to increase the emissivity, and wherein the mesh size is chosen to filter the desired signal at particular wavelengths and/or to increase the emission at particular wavelengths; or
dots (16) of a CMOS usable metal placed on top of resistive heater to increase the emissivity, and wherein the size of the dots and the distance between the dots are chosen to filter the desired signal at particular wavelengths and/or to increase the emission at particular wavelengths; and/or
an IR filter attached by means of wafer bonding, wherein the IR filter optionally comprises a chip or wafer etched by DRIE to form one or more membranes comprising one or more of silicon dioxide and silicon nitride.

9. The IR source according to any preceding claim, packaged with a reflector; and/or packaged in a flip chip method.

10. A Non dispersive Infra-Red (NDIR) sensor comprising the IR source of any preceding claim on the chip and an IR detector on a second membrane on the same chip.

11. The NDIR sensor according to claim 9, wherein the IR detector comprises a thermopile, the thermopile comprising one or more thermocouples; and/or
wherein the IR detector comprises one or more thermodiodes or thermotransistors

12. The NDIR sensor according to claim 9 or 10, further comprising:
a partition (23) created by a structure of via and metal layers between the IR source and detector; and/or
a partition created above the chip by wafer bonding of a patterned substrate; and/or
a partition created above the chip during packaging of the chip.

13. The NDIR sensor according to any of claims 9 to 11, wherein the IR detector comprises a mesh made of a CMOS usable metal layer placed on top of the thermopile to increase the sensitivity, and wherein the mesh size is chosen to filter the desired signal at particular wavelengths and/or to increase the signal at particular wavelengths; and/or
wherein the IR detector comprises dots of a CMOS usable metal layer placed on top of the thermopile to increase the sensitivity, and wherein the size of the dots and the distance between the dots are chosen to filter the desired signal at particular wavelengths and/or to increase the signal at particular wavelengths; and/or
wherein the NDIR chip is packaged in a cylindrical package such that there is a circular optical path from the source to the detector.

14. The NDIR sensor according to any of claims 9 to 12, further comprising:
an IR filter (30) in an optical path of a package comprising the chip;
and/or a particle filter.

15. The NDIR sensor according to any of claims 9 to 13, further comprising an IR absorbing layer selected from a group comprising a polymer, carbon nanotubes, graphene, metal films, metal blacks and thin film stacks, wherein the IR absorbing layer is optionally compatible with post-CMOS processing and is formed by any technique selected from CVD, local growth and ink-jet deposition.

16. A method of manufacturing an Infra-Red (IR) source using a CMOS process, the method comprising:
forming a substrate (1);
forming a dielectric layer (4) on the substrate, and
forming a dielectric membrane by back etching a portion of the substrate (1),
forming a resistive heater (2) in or on the dielectric membrane using a CMOS usable metal, **characterised in that** the IR source comprises a patterned metal layer on top of the resistive heater to improve IR emission.

## Patentansprüche

1. Infrarot (IR)-Quelle, umfassend ein Widerstandsheizelement (2), hergestellt aus einem CMOS-verwendbaren Metall auf einer dielektrischen Membran (4), gefertigt in einem CMOS-Verfahren gefolgt von einem Rückätzen, **dadurch gekennzeichnet, dass** die IR-Quelle eine strukturierte Metallschicht (16) oben auf dem Widerstandsheizelement umfasst, um die IR-Emission zu verbessern.

2. IR-Quelle nach Anspruch 1, wobei das CMOS-verwendbare Metall ein Verbindungsmetall (3) in CMOS-Schaltung bildet, das auf demselben Chip wie die dielektrische Membran (4) gebildet ist, und wobei das CMOS-verwendbare Metall mindestens eine Wolframschicht umfasst, und wobei die mindestens eine Wolframschicht sowohl das Widerstandsheizelement (2) als auch das Verbindungsmetall (3) in CMOS-Schaltung auf dem Chip bildet.

3. IR-Quelle nach Anspruch 1, wobei das Widerstandsheizelement (2) eine Metallschicht umfasst, die eine Titan/Titannitrid-Beschichtung (7) direkt unterhalb der Metallschicht umfasst, und/oder wobei eine monokristalline Silizium-Wärmestreuplatte (9) und/oder eine polykristalline Siliziumplatte (9) direkt unter dem Heizelement (2) vorhanden ist, wobei die Platten konfiguriert sind, die IR-Emission von dem Heizelement zu reflektieren.

4. IR-Quelle nach einem der vorhergehenden Ansprüche, ferner Folgendes umfassend:
eine oder mehrere Metall-Wärmestreuplatten (10) direkt über oder unter dem Heizelement, wobei die Metall-Wärmestreuplatte (10) wahlweise exponiert ist durch Wegätzen der Passivierung, und/oder
einen MOSFET in Reihe mit dem Heizelement, um die Temperatur des Heizelements zu steuern; und/oder
einen Temperatursensor (12), der innerhalb der Membran eingebettet ist und unter dem Heizelement (2) oder neben dem Heizelement angeordnet ist, wobei der Temperatursensor (12) eines der Folgenden beinhaltet: einen Diodentemperatursensor (Thermodiode), Bipolartransistor-Temperatursensor (Thermotransistor), resistiven Silizium-Temperatursensor und resistiven Metall-Temperatursensor, und wobei wahlweise die Metall-Wärmestreuplatte exponiert ist durch Wegätzen der Passivierung, und wobei wahlweise der Temperatursensor konfiguriert ist, die IR-Emission von dem Heizelement zu reflektieren.

5. IR-Quelle nach einem der vorhergehenden Ansprüche, wobei:
die Membran (4) durch ein Verfahren gebildet ist ausgewählt aus DRIE,
anisotropem Nassätzen, KOH und TMAH; und/oder
die dielektrische Membran (4) auf einem Ausgangssubstrat (1) gefertigt ist, das einen SOI- oder Siliziumwafer umfasst; und/oder
die Wolframschicht, die für das Heizelement (2) verwendet wird, nahe einer spannungsfreien Achse auf der Membran liegt.

6. IR-Quelle nach einem der vorhergehenden Ansprüche, gebildet als eine Anordnung von Mikroheizplatten, wobei jede Mikroheizplatte das Widerstandsheizelement (2) umfasst, hergestellt aus einem CMOS-verwendbaren Metall auf einer dielektrischen Membran (4), gefertigt in einem CMOS-Verfahren gefolgt von einem Rückätzen, wobei die IR-Quelle wahlweise so konfiguriert ist, dass alle Mikroheizplatten in der Anordnung gleichzeitig oder individuell betriebsfähig sind.

7. IR-Quelle nach einem der vorhergehenden Ansprüche, wobei:
eine obere Oberfläche der Membran mit einem der Folgenden ausgestattet ist: einer Siliziumdioxid-Passivierungsschicht (6) und einer Siliziumnitrid-Passivierungsschicht; und/oder
eine obere Oberfläche auf der Membran mit einer Beschichtung (26) ausgestattet ist, die ein Material umfasst, ausgewählt aus der Gruppe beinhaltend Polymer, Ruß, Kohlenstoff-Nanoröhren, Graphen und ein Material mit hoher IR-Emissivität, wobei die Beschichtung wahlweise kompatibel mit Nach-CMOS-Verarbeitung ist und durch eines oder mehr von CVD, lokalem Aufwachsen und Inkjet-Abscheidungsverfahren gebildet ist.

8. IR-Quelle nach einem der vorhergehenden Ansprüche, wobei die strukturierte Metallschicht
ein Gitter (16) ist, das aus einer CMOS-verwendbaren Metallschicht
hergestellt ist, die oben auf dem Widerstandsheizelement angeordnet ist, um die Emissivität zu erhöhen, und wobei die Maschenweite ausgewählt ist, um das gewünschte Signal in bestimmten Wellenlängen zu filtern und /oder um die Emission in bestimmten Wellenlängen zu erhöhen; oder
Punkte (16) eines CMOS-verwendbaren Metalls sind, das oben auf dem
Widerstandsheizelement angeordnet ist, um die Emissivität zu erhöhen, und wobei die Größe der Punkte und der Abstand zwischen den Punkten ausgewählt sind, um das gewünschte Signal in bestimmten Wellenlängen zu filtern und/oder um die Emission in bestimmten Wellenlängen zu erhöhen; und/oder
ein IR-Filter ist, der durch Waferbonden befestigt ist, wobei der IR-Filter wahlweise einen Chip oder Wafer geätzt durch DRIE umfasst, um eine oder mehrere Membranen zu bilden, die eines oder mehreres von Siliziumdioxid und Siliziumnitrid umfassen.

9. IR-Quelle nach einem der vorhergehenden Ansprüche, gepackt mit einem Reflektor; und/oder in einer Flip-Chip-Technik gepackt.

10. Nichtdispersiver Infrarot (NDIR)-Sensor, umfassend die IR-Quelle nach einem der vorgehenden Ansprüche auf dem Chip und einen IR-Detektor auf einer zweiten Membran auf demselben Chip.

11. NDIR-Sensor nach Anspruch 9, wobei der IR-Detektor eine Thermosäule umfasst, wobei die Thermosäule ein oder mehrere Thermoelemente umfasst; und/oder
wobei der IR-Detektor eine oder mehrere Thermodioden oder Thermotransistoren umfasst.

12. NDIR-Sensor nach Anspruch 9 oder 10, ferner Folgendes umfassend:
eine Partition (23), die durch eine Struktur aus Durchkontakt- und Metallschichten zwischen der IR-Quelle und dem IR-Detektor erzeugt wird; und/oder
eine Partition, die über dem Chip durch Waferbonden eines strukturierten Substrats erzeugt wird; und/oder
eine Partition, die über dem Chip während des Packens des Chips erzeugt wird.

13. NDIR-Sensor nach einem der Ansprüche 9 bis 11, wobei der IR-Detektor ein Gitter umfasst, das aus einer CMOS-verwendbaren Metallschicht hergestellt ist, die oben auf der Thermosäule angeordnet ist, um die Empfindlichkeit zu erhöhen, und wobei die Maschenweite ausgewählt ist, um das gewünschte Signal in bestimmten Wellenlängen zu filtern und/oder um das Signal in bestimmten Wellenlängen zu erhöhen; und/oder
wobei der IR-Detektor Punkte einer CMOS-verwendbaren Metallschicht umfasst, die oben auf der Thermosäule angeordnet sind, um die Empfindlichkeit zu erhöhen, und wobei die Größe der Punkte und der Abstand zwischen den Punkten ausgewählt ist, um das gewünschte Signal in bestimmten Wellenlängen zu filtern und/oder um das Signal in bestimmten Wellenlängen zu erhöhen; und/oder
wobei der NDIR-Chip in einer zylindrischen Packung gepackt ist, so dass ein kreisförmiger optischer Weg von der Quelle zu dem Detektor vorhanden ist.

14. NDIR-Sensor nach einem der Ansprüche 9 bis 12, ferner umfassend:
einen IR-Filter (30) in einem optischen Weg einer Packung, die den Chip umfasst; und/oder einen Partikelfilter.

15. NDIR-Sensor nach einem der Ansprüche 9 bis 13, ferner eine IR-Absorptionsschicht umfassend, ausgewählt aus einer Gruppe umfassend ein Polymer, Kohlenstoff-Nanoröhren, Graphen, Metallschichten, Metallruß und Dünnschicht-Stapel, wobei die IR-Absorptionsschicht wahlweise kompatibel mit Nach-CMOS-Verarbeitung ist und durch jegliche Technik gebildet ist, ausgewählt aus CVD, lokalem Aufwachsen und Inkjet-Abscheidungsverfahren.

16. Verfahren zur Herstellung einer Infrarot (IR)-Quelle unter Verwendung eines CMOS-Verfahrens, wobei das Verfahren Folgendes umfasst:
Bilden eines Substrats (1);
Bilden einer dielektrischen Schicht (4) auf dem Substrat, und
Bilden einer dielektrischen Membran durch Rückätzen eines Abschnitts des Substrats (1),
Bilden eines Widerstandsheizelements (2) in oder auf der dielektrischen Membran unter Verwendung eines CMOS-verwendbaren Metalls, **dadurch gekennzeichnet, dass** die IR-Quelle eine strukturierte Metallschicht oben auf dem Widerstandsheizelement umfasst, um die IR-Emission zu verbessern.

## Revendications

1. Source d'infrarouges (IR) comprenant un moyen de chauffage résistif (2) réalisé à partir d'un métal utilisable CMOS sur une membrane diélectrique (4) qui est fabriquée selon un processus CMOS suivi par une gravure arrière, **caractérisée en ce que** la source d'IR comprend une couche en métal conformée (16) sur le sommet du moyen de chauffage résistif de manière à améliorer l'émission d'IR.

2. Source d'IR selon la revendication 1, dans laquelle le métal utilisable CMOS forme un métal d'interconnexion (3) dans un circuit CMOS qui est formé sur la même puce que la membrane diélectrique (4), et dans laquelle le métal utilisable CMOS comprend au moins une couche de tungstène, et dans laquelle ladite au moins une couche de tungstène forme à la fois le moyen de chauffage résistif (2) et le métal d'interconnexion (3) dans un circuit CMOS sur la puce.

3. Source d'IR selon la revendication 1, dans laquelle le moyen de chauffage (2) comprend une couche en métal qui comporte un chemisage en titane/nitrure de titane (7) directement sous la couche en métal, et/ou dans laquelle il y a une plaque de diffusion thermique en silicium monocristallin (9) et/ou une plaque en silicium polycristallin (9) directement au-dessous du moyen de chauffage (2), les plaques étant configurées de manière à réfléchir une émission d'IR qui provient du moyen de chauffage.

4. Source d'IR selon l'une quelconque des revendications précédentes, comprenant en outre :
une ou plusieurs plaque(s) de diffusion thermique en métal (10) directement au-dessus ou au-dessous du moyen de chauffage, dans laquelle la plaque de diffusion thermique en métal (10) est en option exposée au moyen d'un enlèvement par gravure de la passivation, et/ou
un MOSFET en série avec le moyen de chauffage de manière à contrôler la température du moyen de chauffage ; et/ou
un capteur de température (12) intégré à l'intérieur de la membrane et placé au-dessous du moyen de chauffage (2) ou adjacent au moyen de chauffage, le capteur de température (12) incluant soit un capteur de température à diode(s) (une thermodiode), soit un capteur de température à transistor(s) bipolaire(s) (un thermotransistor), soit un capteur de température en silicium résistif, soit un capteur de température en métal résistif, et dans laquelle, en option, la plaque de diffusion thermique en métal est exposée au moyen d'un enlèvement par gravure de la passivation, et dans laquelle, en option, le capteur de température est configuré de manière à réfléchir une émission d'IR qui provient du moyen de chauffage.

5. Source d'IR selon l'une quelconque des revendications précédentes, dans laquelle :
la membrane (4) est formée au moyen d'un processus qui est choisi parmi une gravure DRIE, une gravure par voie humide anisotrope, une gravure KOH et une gravure TMAH ; et/ou
la membrane diélectrique (4) est fabriquée sur un substrat de départ (1) qui comprend une plaquette en SOI ou en silicium ; et/ou
la couche en tungstène utilisée pour le moyen de chauffage (2) est proche d'un axe de contrainte nulle sur la membrane.

6. Source d'IR selon l'une quelconque des revendications précédentes, formée en tant que réseau de microplaques chauffantes, chaque microplaque chauffante comprenant le moyen de chauffage résistif (2) réalisé à partir d'un métal utilisable CMOS sur une membrane diélectrique (4) qui est fabriquée selon un processus CMOS suivi par une gravure arrière, dans laquelle la source d'IR est en option configurée de telle sorte que toutes les microplaques chauffantes dans le réseau puissent fonctionner en même temps ou de manière individuelle.

7. Source d'IR selon l'une quelconque des revendications précédentes, dans laquelle :
une surface sommitale de la membrane est munie de soit une couche de passivation en dioxyde de silicium (6), soit une couche de passivation en nitrure de silicium ; et/ou
une surface sommitale sur la membrane est munie d'un revêtement (26) qui comprend un matériau qui est sélectionné parmi un groupe qui inclut un polymère, du noir de carbone, des nanotubes en carbone, du graphène, et un matériau à émissivité d'IR élevée, dans laquelle le revêtement est en option compatible avec un traitement post-CMOS et est formé au moyen d'une ou de plusieurs technique(s) prise(s) parmi un procédé CVD, une croissance locale et un dépôt par jet d'encre.

8. Source d'IR selon l'une quelconque des revendications précédentes, dans laquelle la couche en métal conformée est :
un maillage (16) constitué par une couche en métal utilisable CMOS qui est placée sur le sommet du moyen de chauffage résistif de manière à augmenter l'émissivité, et dans laquelle la taille du maillage est choisie de manière à filtrer le signal souhaité à des longueurs d'onde particulières et/ou de manière à augmenter l'émission à des longueurs d'onde particulières ; ou
des points (16) en un métal utilisable CMOS placés sur le sommet du moyen de chauffage résistif de manière à augmenter l'émissivité, et dans laquelle la taille des points et la distance entre les points sont choisies de manière à filtrer le signal souhaité à des longueurs d'onde particulières et/ou de manière à augmenter l'émission à des longueurs d'onde particulières ; et/ou
un filtre IR lié au moyen d'une liaison sur plaquette, dans laquelle le filtre IR comprend en option une puce ou une plaquette gravée par gravure DRIE de manière à former une ou plusieurs membrane(s) comprenant un ou plusieurs constituant(s) pris parmi le dioxyde de silicium et le nitrure de silicium.

9. Source d'IR selon l'une quelconque des revendications précédentes, mise sous module avec un réflecteur ; et/ou mise sous module selon un procédé de connexion par billes.

10. Capteur d'infrarouges non dispersif (NDIR) comprenant la source d'IR selon l'une quelconque des revendications précédente sur la puce et un détecteur d'IR sur une seconde membrane sur la même puce.

11. Capteur NDIR selon la revendication 9, dans lequel :
le détecteur d'IR comprend une thermopile, la thermopile comprenant un ou plusieurs thermocouple(s) ; et/ou dans lequel :
le détecteur d'IR comprend une ou plusieurs thermodiode(s) ou un ou plusieurs thermotransistor(s).

12. Capteur NDIR selon les revendications 9 ou 10, comprenant en outre :
une partition (23) qui est créée au moyen d'une structure constituée par des vias et des couches en métal entre la source d'IR et le détecteur ; et/ou
une partition qui est créée au-dessus de la puce au moyen d'une liaison par plaquette d'un substrat conformé ; et/ou
une partition qui est créée au-dessus de la puce pendant la mise sous module de la puce.

13. Capteur NDIR selon l'une quelconque des revendications 9 à 11, dans lequel :
le détecteur d'IR comprend un maillage qui est réalisé à partir d'une couche en métal utilisable CMOS qui est placée sur le sommet de la thermopile de manière à augmenter la sensibilité, et dans lequel la taille du maillage est choisie de manière à filtrer le signal souhaité à des longueurs d'onde particulières et/ou de manière à augmenter le signal à des longueurs d'onde particulières ; et/ou dans lequel :
le détecteur d'IR comprend des points qui sont constitués par une couche en métal utilisable CMOS qui est placée sur le sommet de la thermopile de manière à augmenter la sensibilité, et dans lequel la taille des points et la distance entre les points sont choisies de manière à filtrer le signal souhaité à des longueurs d'onde particulières et/ou de manière à augmenter le signal à des longueurs d'onde particulières ; et/ou dans lequel :
la puce NDIR est mise sous module selon un module cylindrique de telle sorte qu'il y ait un chemin optique circulaire depuis la source jusqu'au détecteur.

14. Capteur NDIR selon l'une quelconque des revendications 9 à 12, comprenant en outre un filtre IR (30) dans un chemin optique d'un module comprenant la puce ; et/ou un filtre à particules.

15. Capteur NDIR selon l'une quelconque des revendications 9 à 13, comprenant en outre une couche absorbeuse d'IR qui est sélectionnée parmi un groupe qui comprend un polymère, des nanotubes en carbone, du graphène, des films en métal, des noirs de métal et des empilements de films minces, dans lequel la couche absorbeuse d'IR est en option compatible avec un traitement post-CMOS et est formée au moyen d'une quelconque technique qui est sélectionnée parmi un procédé CVD, une croissance locale et un dépôt par jet d'encre.

16. Procédé de fabrication d'une source d'infrarouges (IR) en utilisant un processus CMOS, le procédé comprenant :
la formation d'un substrat (1) ;
la formation d'une couche diélectrique (4) sur le substrat ; et
la formation d'une membrane diélectrique par gravure arrière d'une partie du substrat (1) ;
la formation d'un moyen de chauffage résistif (2) dans ou sur la membrane diélectrique en utilisant un métal utilisable CMOS, **caractérisé en ce que** la source d'IR comprend une couche en métal conformée sur le sommet du moyen de chauffage résistif de manière à améliorer l'émission d'IR.
